# FASCICULE DE BREVET EUROPEEN

(11) **EP 0 877 572 B1**
(45) Date de publication et mention de la délivrance du brevet: **17.10.2001**
(21) Numéro de dépôt: 97900635.0
(22) Date de dépôt: 13.01.1997
(51) Int. Cl.: A47J 36/38

(54) **APPAREIL DE CUISSON ELECTRIQUE, TEL QUE PAR EXEMPLE UNE FRITEUSE, COMPORTANT UN DISPOSITIF DE CONDENSATION DES VAPEURS DE CUISSON**
ELEKTRISCHES GARGERÄT, Z.B. FRITEUSE, MIT EINER KONDENSATIONSVORRICHTUNG FÜR WRASEN
ELECTRICAL COOKING APPARATUS SUCH AS A DEEP FRYER COMPRISING A COOKING VAPOUR CONDENSATION DEVICE

(30) Priorité: 15.01.1996 FR 9600381
(43) Date de publication de la demande: 18.11.1998
(73) Titulaire: MOULINEX S.A., 14123 Cormelles le Royal (FR)
(72) Inventeur: BOIS, Bernard, Marcel, F-14000 Caen (FR); COLLAS, Guy, F-14123 Ifs (FR)
(74) Mandataire: Busquets, Jean-Pierre
(86) Numéro de dépôt international: FR9700054
(87) Numéro de publication internationale: WO9725910

(56) Documents cités:
- WO-A-93/10698
- WO-A-94/23626
- DE-A- 2 451 130
- FR-A- 2 180 637
- FR-A- 2 303 448
- GB-A- 2 266 654

## Description

La présente invention se rapporte aux appareils de cuisson électriques, tels que par exemple des friteuses à usage ménager, qui comportent un boîtier ouvert destiné à être fermé par un couvercle pendant la phase de cuisson et qui est pourvu à sa base d'un socle, une cuve de cuisson placée dans le boîtier et chauffée par des moyens de chauffage électrique, et un dispositif de condensation des vapeurs de cuisson qui est associé audit boîtier et qui communique avec la cuve par des moyens de conduite permettant l'écoulement des vapeurs de cuisson.

Pour des appareils de cuisson connus de ce genre, comme décrit dans le document WO-A-9423626, il a été proposé d'appliquer de manière amovible le dispositif de condensation, du type à échange de chaleur, et destiné à éliminer les vapeurs contenant les substances odorantes inopportunes émises au cours de la cuisson, contre l'une des faces extérieures du boîtier, en particulier la face extérieure arrière du boîtier, au moyen d'organes de fixation appropriés. Toutefois, ce montage en appui du dispositif de condensation s'avère difficile à effectuer et les organes de fixation utilisés sont relativement complexes afin d'assurer en permanence le maintien du dispositif de condensation. En outre, le fait d'adjoindre extérieurement et intimement le dispositif de condensation au boîtier de l'appareil de cuisson contribue à rendre particulièrement encombrant l'appareil ainsi équipé de son dispositif de condensation, et dénature notablement l'esthétique habituelle de l'appareil de cuisson considéré, par exemple une friteuse.

L'invention a notamment pour but de remédier à ces inconvénients.

Selon l'invention, un appareil de cuisson électrique du type exposé ci-dessus, est plus particulièrement caractérisé en ce que le dispositif de condensation est monté escamotable dans le socle du boîtier.

Ainsi, l'invention met judicieusement à profit l'existence du socle du boîtier pour y incorporer d'une manière simple le dispositif de condensation qui, en position rentrée, est peu encombrant et s'intègre parfaitement à l'esthétique générale de l'appareil de cuisson considéré.

Selon un exemple de réalisation préféré, le dispositif de condensation est monté coulissant horizontalement dans des glissières disposées dans un logement pratiqué dans le socle du boîtier, et est amovible.

Les caractéristiques et avantages de l'invention ressortiront d'ailleurs de la description qui va suivre, à titre d'exemple non limitatif, en référence aux dessins annexés dans lesquels :
- la figure 1 est une vue schématique en coupe verticale d'un appareil de cuisson électrique, tel qu'une friteuse, selon l'invention ;
- la figure 2 est une vue schématique partielle en perspective, à échelle agrandie, du dispositif de condensation de la figure 1, montrant une boîte à cassettes réfrigérantes en position ouverte ; et
- la figure 3 est une vue schématique en perspective éclatée de l'appareil de cuisson de la figure 1, sans le couvercle du boîtier.

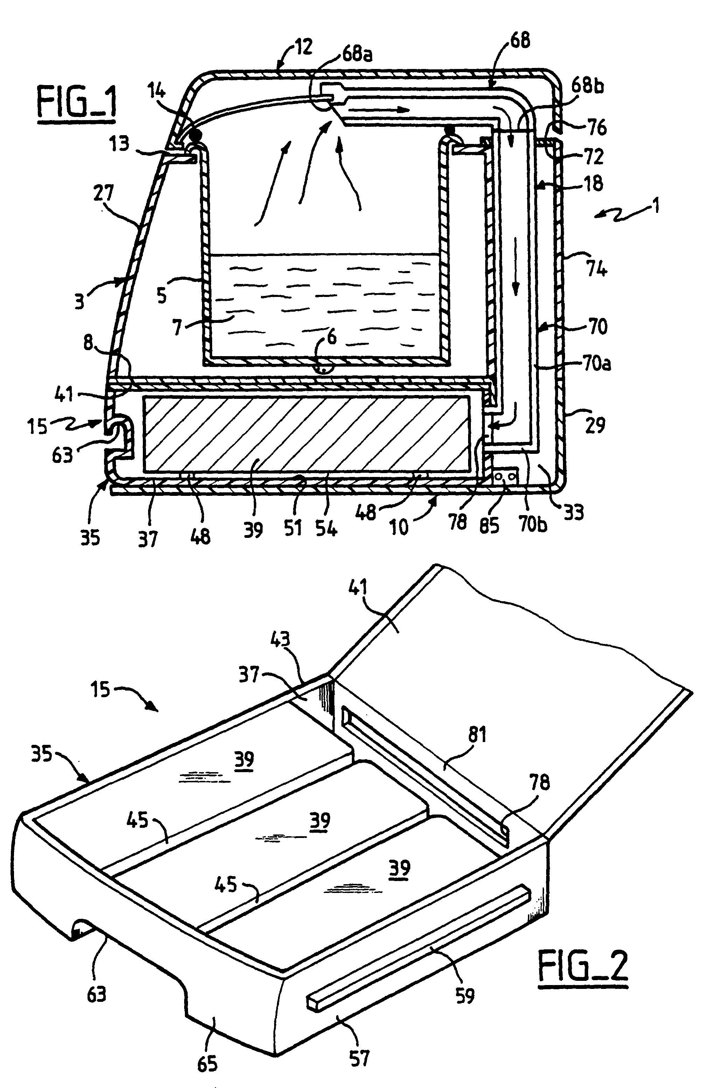

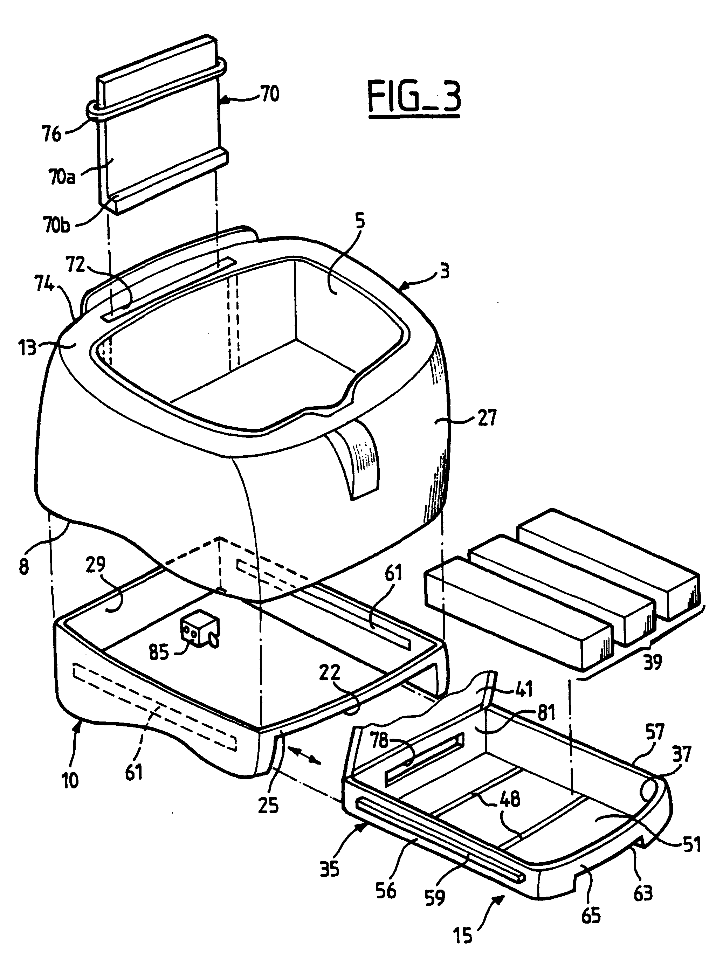

L'appareil de cuisson électrique 1 représenté schématiquement à la figure 1 est une friteuse électrique ménagère qui comprend un boîtier ou récipient ouvert 3, de forme générale sensiblement parallélépipédique, dans lequel est placée une cuve métallique 5 destinée à être chauffée par des moyens de chauffage électrique, tels qu'une résistance de chauffage 6, et contenant un bain de friture 7. Le boîtier 3 est supporté à sa base 8 par un socle 10, mieux visible à la figure 3, de forme également sensiblement parallélépipédique et réalisé, de préférence, d'une seule pièce avec le boîtier, et est destiné à être fermé, pendant la friture, par un couvercle 12 monté articulé de façon amovible sur un bord supérieur 13 du boîtier grâce à un moyen d'articulation démontable (non figuré).

Le couvercle 12 comporte sur sa face interne un joint 14 conformé de manière à réaliser l'étanchéité entre la cuve 5 et le couvercle 12 lorsque ce dernier est fermé, comme montré à la figure 1.

Le boîtier 3, le socle 10 et le couvercle 12 sont moulés en une matière plastique telle que, par exemple, le polypropylène qui est particulièrement économique et d'un entretien facile.

La friteuse 1, figure 1, comprend également un dispositif de condensation de vapeur, du type à échange de chaleur, désigné par la référence globale 15 sur les figures, et associé au boîtier 3, ainsi que des moyens de conduite ou de liaison 18 établissant une communication entre le volume supérieur de la cuve 5 et le dispositif de condensation 15 et permettant l'écoulement des vapeurs de cuisson.

Selon l'invention, le dispositif de condensation 15 est monté escamotable dans le socle 10 du boîtier 3.

Dans un exemple de réalisation illustré à la figure 1, le dispositif de condensation 15 est, d'une part, monté coulissant horizontalement dans un logement 22 (figure 3) pratiqué dans le socle 10, et d'autre part, est amovible.

Dans cet exemple, le logement 22 est constitué par un compartiment délimité par les parois du socle 10, s'ouvrant en face frontale 25 du socle 10 (voir figure 3) qui correspond à la face frontale 27 du boîtier 3, et destiné à recevoir le dispositif de condensation 15 en laissant subsister entre celui-ci et la face postérieure 29 du socle 10 un léger espace 33, comme illustré à la figure 1.

Comme le montrent les figures 2 et 3, le dispositif de condensation 15 comporte une boîte étanche 35, de forme parallélépipédique, se composant d'un réceptacle ouvert 37 conformé en un tiroir et contenant des cassettes réfrigérantes hermétiques identiques 39, et d'un couvercle de fermeture étanche 41 qui, dans l'exemple de réalisation illustré aux figures 2 et 3, est monté articulé de façon amovible sur un bord supérieur 43 du réceptacle 37 grâce à un moyen d'articulation démontable (non figuré).

Dans cet exemple, les cassettes 39 présentent chacune une forme parallélépipédique et s'étendent longitudinalement et parallèlement les unes à côté des autres dans le réceptacle 37 de la boîte 35 en ménageant entre elles des canaux condenseurs 45 (figure 2) destinés à l'écoulement des vapeurs de cuisson. Ces cassettes 39 sont réalisées en une matière plastique et contiennent chacune de l'eau congelée comme agent réfrigérant, éventuellement avec un colorant non toxique.

Comme le montre la figure 3, les cassettes 39 sont montées amovibles dans le réceptacle 37 de la boîte 35 et reposent à plat sur des traverses 48 (figures 1 et 3) surmontant la paroi de fond 51 du réceptacle 37 de façon à créer une zone inférieure, désignée en 54 sur la figure 1, destinée à collecter le condensat. Les cassettes amovibles 39 sont entreposées dans le freezer d'un réfrigérateur avant utilisation, de manière à permettre la congélation de l'eau qu'elles contiennent.

Grâce à leur amovibilité, le réceptacle 37 et le couvercle 41 de la boîte 35, ainsi que les cassettes 39, sont facilement nettoyables, même dans un lave-vaisselle.

En regard de la figure 3, les deux faces latérales 56 et 57 du réceptacle 37 de la boîte 35 portent chacune extérieurement un rail horizontal 59, dont un seul est visible sur la figure 3, venant s'engager dans une glissière correspondante 61 disposée sur l'une des parois latérales du compartiment 22 du socle 10 lors de l'insertion par coulissement horizontal de la boîte 35 (couvercle 41 fermé) dans le compartiment 22.

Sur les figures 1 à 3, on a représenté en 63 une large échancrure pratiquée dans la face antérieure 65 du réceptacle 37 et formant un organe de préhension destiné au retrait de la boîte 35.

Comme le montre la figure 1, les moyens 18 de conduite des vapeurs de cuisson entre la cuve 5 et la boîte 35 à cassettes réfrigérantes 39 formant le condenseur, comportent une pièce tubulaire formant un conduit 68 qui est intégré dans le couvercle 12 du boîtier 3 et dont une extrémité 68a débouche dans le volume supérieur de la cuve 5, et une autre pièce tubulaire formant également un conduit 70 (mieux visible à la figure 3) qui s'étend verticalement dans une ouverture traversante 72 pratiquée dans le boîtier 3, à partir de la bordure supérieure 13 de sa face arrière 74 ; le conduit 70 porte un joint 76 destiné à assurer l'étanchéité au niveau de l'ouverture 72. Comme le montre la figure 3, le conduit 70 présente une section en L dont la branche verticale 70a traverse l'ouverture 72 et est liée de manière étanche à l'autre extrémité 68b du conduit 68, et dont la branche horizontale 70b débouche dans l'espace intérieur 33 du socle 10 (voir figure 1) et est engagée, de façon étanche par son extrémité libre dans une ouverture correspondante d'admission 78 percée dans la face postérieure 81 du réceptacle 37 de la boîte 35.

En regard des figures 1 et 3, le socle 10 du boîtier 3 comporte dans son espace intérieur 33 (figure 1) un interrupteur de sécurité 85 apte à détecter le positionnement correct de la boîte 35 (contenant les cassettes 39) dans le compartiment 22 du socle 10 de manière à autoriser l'alimentation électrique de la résistance 6 de chauffage de la cuve 5.

En se référant à la figure 1 et en supposant que la boîte 35 (couvercle 41 fermé) contenant les cassettes 39 est correctement positionnée dans la compartiment 22 du socle 10, l'évacuation et l'élimination des vapeurs présentes dans la friteuse s'effectuent de la manière suivante.

Au cours de la friture, les vapeurs (symbolisées par les flèches) qui se dégagent et qui contiennent les substances odorantes inopportunes, s'échappent par le conduit 68, s'écoulent vers le bas dans le conduit 70 et pénètrent dans la boîte 35 via l'ouverture d'admission 78. Elles entrent alors en contact avec les cassettes d'eau congelée 39 par passage dans les canaux condenseurs 45 (figure 2) dans lesquels elles se condensent, l'eau de condensation contenant les odorants inopportuns tombant dans la zone collectrice 54 de la boîte 35.

## Revendications

1. Appareil de cuisson électrique, tel que par exemple une friteuse, comportant un boîtier ouvert (3) destiné à être fermé par un couvercle (12) pendant la phase de cuisson et qui est pourvu à sa base d'un socle (10), une cuve de cuisson (5) placée dans le boîtier (3) et chauffée par des moyens de chauffage électrique (6), et un dispositif (15) de condensation des vapeurs de cuisson qui est associé audit boîtier et qui communique avec la cuve (5) par des moyens de conduite (18) permettant l'écoulement des vapeurs de cuisson,
**caractérisé en ce que** le dispositif de condensation (15) est monté escamotable dans le socle (10) du boîtier (3).

2. Appareil de cuisson électrique selon la revendication 1,
**caractérisé en ce que** le dispositif de condensation (15) est monté coulissant horizontalement dans des glissières (61) disposées dans un logement (22) pratiqué dans le socle (10) du boîtier.

3. Appareil de cuisson électrique selon la revendication 2,
**caractérisé en ce que** le logement (22) débouche en face frontale (25) du socle (10) du boîtier.

4. Appareil de cuisson électrique selon l'une des revendications 1 à 3,
**caractérisé en ce que** le dispositif de condensation (15) est amovible.

5. Appareil de cuisson électrique selon l'une quelconque des revendications précédentes, dans lequel le dispositif de condensation (15) comporte une boîte étanche (35) contenant des cassettes réfrigérantes hermétiques amovibles (39),
**caractérisé en ce que** ladite boîte (35) est conformée en un tiroir de forme sensiblement parallélépipédique.

6. Appareil de cuisson électrique selon la revendication 5,
**caractérisé en ce que** la boîte (35) comporte un réceptacle (37) qui est fermé de façon étanche par un couvercle amovible (41).

7. Appareil de cuisson électrique selon la revendication 5 ou 6, dans lequel les cassettes (39) sont agencées dans la boîte (35) les unes par rapport aux autres de manière à ménager entre elles des canaux condenseurs (45) à travers lesquels s'écoulent les vapeurs de cuisson,
**caractérisé en ce que** lesdites cassettes (39) reposent à plat sur des traverses (48) surmontant le fond (51) de la boîte (35) de façon à créer une zone inférieure (54) destinée à collecter le condensat.

8. Appareil de cuisson électrique selon les revendications 3 et 5 à 7,
**caractérisé en ce que** les moyens (18) de conduite des vapeurs entre la cuve (5) et la boîte (35) comportent une première pièce tubulaire formant conduit (68) qui est intégrée dans le couvercle (12) du boîtier (3) et dont une extrémité (68a) débouche dans le volume supérieur de la cuve (5), et une seconde pièce tubulaire formant également conduit (70) qui s'étend verticalement dans une première ouverture traversante (72) pratiquée dans le boîtier (3), à partir de la bordure supérieure (13) de la face arrière (74) dudit boîtier, dont l'extrémité supérieure (70a) est en communication étanche avec l'autre extrémité (68b) de la première pièce tubulaire (68), et dont l'extrémité inférieure (70b) débouche dans le socle (10) et présente une partie terminale qui est engagée de façon étanche dans une seconde ouverture (78) pratiquée dans la région postérieure (81) de la boîte (35).

9. Appareil de cuisson électrique selon l'une des revendications 5 à 8,
**caractérisé en ce que** la boîte (35) présente sur sa face antérieure (65) un organe de préhension (63).

10. Appareil de cuisson électrique selon l'une quelconque des revendications précédentes,
**caractérisé en ce que** le socle (10) comporte un interrupteur de sécurité (85) apte à détecter le positionnement correct du dispositif de condensation (15) dans le socle (10) du boîtier de manière à autoriser l'alimentation électrique des moyens de chauffage (6).

## Patentansprüche

1. Elektrisches Gargerät, wie beispielsweise eine Friteuse, mit einem offenen Gehäuse (3), das während der Garphase durch einen Deckel (12) verschlossen ist und das an seiner Basis mit einem Sockel (10) versehen ist, einem in das Gehäuse (3) eingesetzten Gargefäß (5), das durch eine elektrische Heizvorrichtung (6) erwärmt wird, und mit einer Vorrichtung (15) zur Kondensation der Wrasen (Gardämpfe), die mit dem Gehäuse zusammenwirkt und mit dem Gefäß (5) durch eine Leitungsvorrichtung (18) verbunden ist, welche das Ausströmen der Wrasen ermöglicht, **dadurch gekennzeichnet, daß** die Kondensationsvorrichtung (15) abnehmbar im Sockel (10) des Gehäuses (3) montiert ist.

2. Elektrisches Gargerät nach Anspruch 1, **dadurch gekennzeichnet, daß** die Kondensationsvorrichtung (15) horizontal verschiebbar in Gleitbahnen (61) montiert ist, die in einem im Sockel (10) des Gehäuses ausgebildeten Sitz (22) angeordnet sind.

3. Elektrisches Gargerät nach Anspruch 2, **dadurch gekennzeichnet, daß** der Sitz (22) an der Frontseite (25) des Sockels (10) des Gehäuses mündet.

4. Elektrisches Gargerät nach einem der Ansprüche 1 bis 3, **dadurch gekennzeichnet, daß** die Kondensationsvorrichtung (15) abnehmbar ist.

5. Elektrisches Gargerät nach einem der vorangehenden Ansprüche, worin die Kondensationsvorrichtung (15) einen dichten Kasten (35) aufweist, der abnehmbare hermetisch verschlossene Kühlkassetten (39) enthält, **dadurch gekennzeichnet, daß** der Kasten (35) als ein Schubkasten von im wesentlichen Quaderform ausgebildet ist.

6. Elektrisches Gargerät nach Anspruch 5, **dadurch gekennzeichnet, daß** der Kasten (35) einen Behälter (37) aufweist, der durch einen abnehmbaren Deckel (41) dicht verschlossen ist.

7. Elektrisches Gargerät nach Anspruch 5 oder 6, worin die Kassetten (39) im Kasten (35) mit Bezug aufeinander so angeordnet sind, daß zwischen ihnen Kondensationskanäle (45) gebildet sind, durch welche die Wrasen strömen, **dadurch gekennzeichnet, daß** die Kassetten (39) eben auf Traversen (48) ruhen, welche nach oben über den Boden (51) des Kastens (35) vorstehen, so daß eine untere Zone (54) zum Sammeln des Kondensats gebildet wird.

8. Elektrisches Gargerät nach den Ansprüchen 3 und 5 bis 7, **dadurch gekennzeichnet, daß** die Vorrichtung (18) zum Weiterleiten von Wrasen zwischen dem Gefäß (5) und dem Kasten (35) ein erstes rohrförmiges Teil aufweist, das eine Leitung (68) bildet, die in den Deckel (12) des Gehäuses (3) integriert ist und von der ein Ende (68a) im oberen Volumen des Gefäßes (5) mündet, und ein zweites rohrförmiges Teil aufweist, das ebenfalls eine Leitung (70) bildet, die sich vertikal in einer im Gehäuse (3) ausgehend von dessen Oberkante (13) der Rückseite (74) des Gehäuses ausgebildeten ersten Durchgangsöffnung (72) erstreckt, wobei das obere Ende (70a) der Leitung (70) in dichter Verbindung mit dem anderen Ende (68b) des ersten rohrförmigen Teils (68) ist und das untere Ende (70b) der Leitung im Sockel (10) mündet und einen Endabschnitt aufweist, der dicht in eine zweite Öffnung (78) eingesetzt ist, die im hinteren Bereich (81) des Kastens (35) ausgebildet ist.

9. Elektrisches Gargerät nach einem der Ansprüche 5 bis 8, **dadurch gekennzeichnet, daß** der Kasten (35) an seiner Vorderseite (65) ein Griffelement (63) aufweist.

10. Elektrisches Gargerät nach einem der vorangehenden Ansprüche, **dadurch gekennzeichnet, daß** der Sockel (10) einen Sicherheitsschalter (85) aufweist, der zur Detektierung der richtigen Positionierung der Kondensationsvorrichtung (15) im Sockel (10) des Gehäuses dient, um in diesem Fall die elektrische Stromversorgung der Heizvorrichtung (6) zuzulassen.

## Claims

1. Electric cooking appliance, such as for example a deep fryer, having an open casing (3) intended to be closed off by a lid (12) during the cooking phase and which is provided at its bottom with a base (10), a cooking vessel (5) placed the casing (3) and heated by electric heating means (6), and a device (15) for condensing the cooking vapours which is associated with said casing and which communicates with the vessel (5) by conduct means (18) allowing the discharge of the cooking vapours,
**characterised in that** the condensation device (15) is retractably mounted in the vase (10) of the casing (3).

2. Electric cooking appliance according to claim 1
**characterised in that** the condensation device (15) is mounted so as to slide horizontally in runners (61) disposed in a housing (22) formed in the base (10) of the casing.

3. Electric cooking appliance according to claim 2,
**characterised in that** the housing (22) opens out on the front face (25) of the base (10) of the casing.

4. Electric cooking appliance according to one of claims 1 to 3,
**characterised in that** the condensation device (15) is removable.

5. Electric cooking appliance according to any one of the preceding claims, in which the condensation device (15) has a sealed box (35) containing removable hermetically sealed refrigerating units (39),
**characterised in that** said box (35) is shaped like a drawer with a substantially parallelepipedal shape.

6. Electric cooking appliance according to claim 5,
**characterised in that** the box (35) has a receptacle (37) which is sealingly closed by a removable lid (41).

7. Electric cooking appliance according to claim 5 or 6, in which the units (39) are arranged in the box (35) with respect to each other so as to form between them condenser channels (45) through which the cooking vapours flow,
**characterised in that** said units (39) rest flat on crossmembers (48) fitting on top of the bottom (51) of the box (35) so as to create a lower area (54) intended to collect the condensate.

8. Electric cooking appliance according to claims 3 and 5 to 7,
**characterised in that** the means (18) for conducting the vapours between the vessel (5) and the box (35) have a first tubular piece forming a conduct (68) which is integrated into the lid (12) of the casing (3) and one end (68a) of which opens out into upper volume of the vessel (5), and a second tubular piece also forming a conduct (70) which extends vertically in a first through opening (72) formed in the casing (3), from the top edge (13) of the rear face (78) of said casing, the top end (70a) of which is in sealed communication with the other end (68b) of the first tubular piece (68), and the bottom end (70b) of which opens out into the base (10) and has an end part which is engaged sealingly in a second opening (78) formed in the rear region (81) of the box (15).

9. Electric cooking appliance according to claim 5 to 8,
**characterised in that** the box (35) has a gripping member (63) on its front face (65).

10. Electric cooking appliance according to any one of the preceding claims,
**characterised in that** the base (10) has a safety switch (85) able to detect the correct positioning of the condensation device (15) in the base (10) of the casing so as to allow the electrical supply to the heating means (6).
